# EUROPÄISCHE PATENTANMELDUNG

(11) **EP 0 903 954 A1**
(43) Veröffentlichungstag der Anmeldung: **24.03.1999**
(21) Anmeldenummer: 98120361.5
(22) Anmeldetag: 17.02.1994
(51) Int. Cl.: H04Q 11/00, H04Q 11/04

(54) **Anordnung zur leitungsgebundenen digitalen Nachrichtenübertragung**

(30) Priorität: 23.04.1993 DE 4313340; 03.02.1994 DE 4403319
(62) Teilanmeldung aus: 94102377.2
(71) Anmelder: KE KOMMUNIKATIONS-ELEKTRONIK GMBH & CO, D-30179 Hannover (DE)
(72) Erfinder: Still, Michael, 30851 Langenhagen (DE); Chahabadi, Ziaedin Dr., 31848 Münder (DE)
(74) Vertreter: Döring, Roger, Dipl.-Ing.

(57) **Zusammenfassung**

Es wird eine Anordnung zur leitungsgebundenen digitalen Nachrichtenübertragung zwischen einer Vermittlungsstelle (VST) eines Fernmeldenetzes und mit derselben verbundenen Teilnehmern (Tln) angegeben, bei welcher zur Durchschaltung einer gegebenenfalls zu verändernden Übertragungsrate zwischen der Vermittlungsstelle (VST) und einem betroffenen Teilnehmer (Tln) in die digitalen Übertragungswege Kanalzuordner (KE) eingeschaltet sind, die mittels entsprechender Steuerbefehle von der Vermittlungsstelle (VST) aus steuerbar sind. Der digitale Übertragungsweg ist für jeden Teilnehmer (Tln) bis zu einem eigenen, für diesen Teilnehmer zugänglichen Übergabepunkt (P) geführt. Vom Übergabepunkt (P) jedes Teilnehmers (Tln) geht eine Busleitung (B) aus, an die unterschiedliche Geräte des Teilnehmers (Tln) unter Zwischenschaltung von Adaptern (AA,SU) parallel zueinander anschließbar sind, welche für das jeweilige Gerät bestimmte Schnittstellensignale liefern. Von jedem Teilnehmer (Tln) sind unterschiedliche Geräte mit denselben zugeordneter Übertragungsrate bis zur Ausnutzung einer am Übergabepunkt (P) verfügbaren maximalen Übertragungsrate wahlweise und getrennt voneinander anschließbar. In räumlicher Nähe der Teilnehmer (Tln) sind Endverzweiger (EVZ) in den Übertragungsweg eingeschaltet und die Kanalzuordner (KE) sind in den Endverzweigern (EVZ) angebracht.

## Beschreibung

Die Erfindung bezieht sich auf eine Anordnung zur leitungsgebundenen digitalen Nachrichtenübertragung zwischen einer Vermittlungsstelle eines Fernmeldenetzes und mit derselben verbundenen Teilnehmern, bei welcher zur Durchschaltung einer gegebenenfalls zu verändernden Übertragungsrate zwischen der Vermittlungsstelle und einem betroffenen Teilnehmer in die digitalen Übertragungswege Kanalzuordner eingeschaltet sind, die mittels entsprechender Steuerbefehle von der Vermittlungsstelle aus steuerbar sind (US-A-4 768 188).

Die digitale Übertragungstechnik mit ihren Vorteilen gegenüber der analogen Technik, beispielweise größere Reichweite und hohe Übertragungsraten, setzt sich in der Nachrichtentechnik immer mehr durch. Sie ermöglicht das Angebot unterschiedlichster Dienste, die von den Teilnehmern eines Fernmeldenetzes genutzt werden können. Diese Dienste umfassen heute u. a. Telefon, Telefax, Telex, Teletex, IDN und ISDN (Basis- und Primärmultiplexanschlüsse). Von besonderer Bedeutung ist dabei der Teilnehmeranschlußbereich des Femmeldenetzes, also das Anschlußleitungsnetz.

Ein derartiges Anschlußleitungsnetz ist unter der Bezeichnung 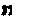 Opal" beispielsweise in der DE-Z 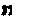 ntz" Bd. 45 (1992), Heft 11, Seiten 902 und 903 für ein Pilotprojekt der DBP Telekom beschrieben. Es sind darin einige ausgewählte Teilnehmer über Glasfasern bzw. Lichtwellenleiter - im folgenden als 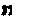 LWL" bezeichnet - mit einer Vermittlungsstelle verbunden. Dabei ist von der Vermittlungsstelle ausgehend ein LWL bis zu einem optischen Verteiler geführt, von dem aus LWL zu Gebäuden und zu einem Kabelabzweiger weitergeführt sind. In diesem passiven Anschlußleitungsnetz wird die Lichtleistung je nach Anzahl der Teilnehmer aufgeteilt, was zu einer Beschränkung der Teilnehmeranzahl führt. Es müssen außerdem angepaßte Laser für Lichtwellenlängen von beispielsweise 1330 nm oder 1550 nm verwendet werden. Hinzu kommt, daß die jeweiligen Geräte der Teilnehmer, das sind beispielsweise Telefone und Datengeräte, analog an sogenannte optische Netzabschlüsse angeschlossen sind, in denen eine digital/analoge Umsetzung erfolgt und in denen die für jeden Teilnehmer vorgesehene Aufteilung der Übertragungsrate geschaltet ist. Die optischen Netzabschlüsse sind für die Teilnehmer nicht zugänglich. Wenn ein Teilnehmer an den bei ihm vorhandenen Geräten Änderungen vornehmen will, beispielweise ein Neuanschluß eines weiteren Geräts, dann muß diese Änderung von Fachpersonal durchgeführt werden, das die Möglichkeit und die Qualifizierung hat, um die notwendigen Schaltarbeiten in den optischen Netzabschlüssen durchführen zu können. Das ist zeitaufwenig und teuer.

Aus der älteren EP-A-0 613 315 geht eine Anordnung zur leitungsgebundenen digitalen Nachrichtenübertragung zwischen einer Vermittlungsstelle eines Femmeldenetzes und mit derselben verbundenen Teilnehmern hervor, bei welcher an die Vermittlungsstelle mindestens ein mit aktiven elektrischen Komponenten arbeitender Kabelverzweiger über eine Leitung angeschlossen ist. Mit dem Kabelverzweiger sind mindestens zwei mit aktiven elektrischen Komponenten arbeitende Endverzweiger über jeweils eine Leitung verbunden. Von jedem Endverzweiger führt zu mindestens einem Teilnehmer eine elektrische Leitung bis zu einem Übergabepunkt, von dem eine Busleitung ausgeht, an die unterschiedliche Geräte eines Teilnehmers unter Zwischenschaltung von Adaptern parallel zueinander anschließbar sind. Die Adapter liefern für das jeweilige Gerät bestimmte Schnittstellensignale. Jeder Teilnehmer kann unterschiedliche Geräte mit denselben zugeordneter Übertragungsrate bis zur Ausnutzung einer am Übergabepunkt verfügbaren maximalen Übertragungsrate wahlweise und getrennt voneinander anschließen. Zur Durchschaltung der jeweiligen, gegebenenfalls zu verändernden Übertragungsrate zwischen der Vermittlungsstelle und dem betroffenen Teilnehmer sind in die digitalen Übertragungswege Kanalzuordner eingeschaltet, die mittels entsprechender Steuerbefehle von der Vermittlungsstelle aus steuerbar sind.

In der eingangs erwähnten US-A-4 768 188 ist ein Anschlußleitungsnetz beschrieben, bei dem statt Kupferkabeln mindestens eine optische Faser eingesetzt ist. Die optische Faser erlaubt die Übertragung einer so großen Bandbreite, daß nach Installation eines entsprechenden Netzes später keine Ergänzung desselben mehr erforderlich ist. Die optische Faser verläuft zwischen einer Zentrale und mehreren Zugangseinheiten, die sich in der Nähe von vielen Teilnehmern befinden. An die Zugangseinheiten sind die Teilnehmer über geeignete Leitungen angeschlossen. In den Zugangseinheiten sind 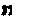 line cards" angeordnet, mit denen jeweils mindestens ein Teilnehmer verbunden ist. Mittels der 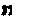 line cards" sind die Teilnehmer mit der Zentrale verbindbar. Die Zugangseinheiten - und damit auch die 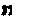 line cards" - sind für die Teilnehmer nicht zugänglich.

Aus der EP-A-0 481 170 geht eine Telefonanlage hervor, in der viele Telefone, insbesondere mit unterschiedlichen Schaltkreisen ausgerüstete Telefone, auf einfache Weise an ein breitbandiges Übertragungsmedium angeschlossen werden können.

Der Erfindung liegt die Aufgabe zugrunde, die eingangs geschilderte Anordnung so zu gestalten, daß die Vorteile der digitalen Nachrichtenübertragung im Teilnehmerbereich besser ausgenutzt werden können.

Diese Aufgabe wird gemäß der Erfindung dadurch gelöst,
- daß der digitale Übertragungsweg für jeden Teilnehmer bis zu einem eigenen, für diesen Teilnehmer zugänglichen Übergabepunkt geführt ist,
- daß vom Übergabepunkt jedes Teilnehmers eine Busleitung ausgeht, an die unterschiedliche Geräte des Teilnehmers unter Zwischenschaltung von Adaptern parallel zueinander anschließbar sind, welche für das jeweilige Gerät bestimmte Schnittstellensignale liefern,
- daß von jedem Teilnehmer unterschiedliche Geräte mit denselben zugeordneter Übertragungsrate bis zur Ausnutzung einer am Übergabepunkt verfügbaren maximalen Übertagungsrate wahlweise und getrennt voneinander anschließbar sind,
- daß in räumlicher Nähe der Teilnehmer Endverzweiger in den Übertragungsweg eingeschaltet sind und
- daß die Kanalzuordner in den Endverzweigern angebracht sind.

Mit dieser Anordnung ist jedem Teilnehmer die Möglichkeit gegeben, Geräte bis zur Ausnutzung der maximalen Übertragungsrate von beispielsweise 2,56 Mbit/s selbst an seinem 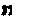 eigenen" Übergabepunkt anzuschließen. Er braucht dazu nur einen jeweils passenden, entsprechende Schnittstellensignale liefernden Adapter zu erwerben, mit dem ein neues oder ein zusätzliches Gerät an den Übergabepunkt angeschlossen werden kann. Die dafür benötigte Übertragungsrate wird von der Vermittlungsstelle aus durchgeschaltet, und zwar mittels entsprechender Steuerbefehle an die Kanalzuordner. Das kann in kürzester Zeit erfolgen. Beispielsweise während der Zeit, die der Teilnehmer braucht, um von dem Ort nach Hause zu kommen, an dem er einen Adapter erworben hat. Fachpersonal, das eine Änderung vor Ort vornehmen muß, wird nicht mehr benötigt.

Der digitale Übertragungsweg ist bei dieser Anordnung für jeden Teilnehmer bis zum Übergabepunkt verlängert, von welchem die Busleitung ausgeht. Die Teilnehmer können also Geräte, die eine digitale Schnittstelle benötigen, mit dem entsprechenden Adapter parallel zueinander an die Busleitung anschließen. Zum Anschluß von analog zu betreibenden Geräten sind entsprechende Adapter mit digital/analog-Umsetzern erforderlich. Diese Umsetzer können auch in den entsprechenden Geräten, beispielsweise in Telefonen, integriert sein.

Die Übertragung der Signale zwischen Vermittlungsstelle und Teilnehmern erfolgt bidirektional. Die maximale Übertragungsrate auf dem an die Vermittlungsstelle angeschlossenen Übertragungsweg liegt beispielsweise bei 34 Mbit/s. Den Teilnehmern sollen beispielsweise 40 Kanäle zu je 64 kbit/s, mindestens jedoch 2,56 Mbit/s, zur Verfügung gestellt werden. Die Kanäle werden den Teilnehmern über die Kanalzuordner zugeordnet. Sie sind nach Installation dieser Anordnung bei den Teilnehmern verfügbar, aber nur im Bedarfsfall durchgeschaltet.

An die Endverzweiger werden vorzugsweise mehrere Teilnehmer über elektrische Leitungen angeschlossen. Es soll mindestens einTeilnehmer angeschlossen sein.

Ein Ausführungsbeispiel des Erfindungsgegenstandes ist in den Zeichnungen dargestellt.

Es zeigen:
Fig. 1 ein schematisches Blockschaltbild einer Anordnung nach der Erfindung.
Fig. 2 eine Einzelheit der Anordnung für einen Teilnehmer.

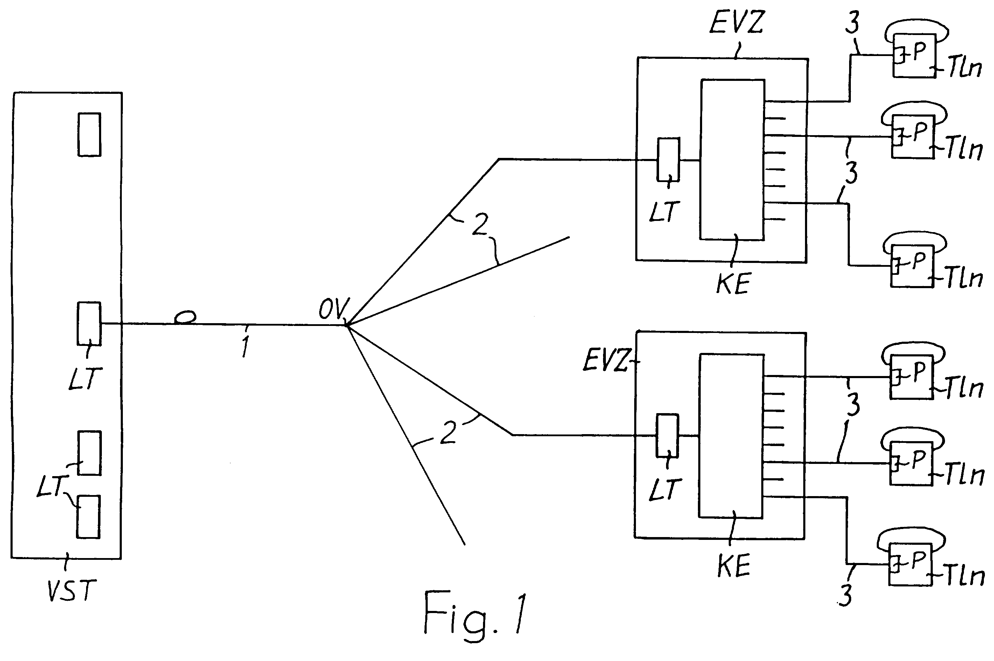

Bei dem in Fig. 1 dargestellten Ausführungsbeispiel ist an eine Vermittlungsstelle VST eines Fernmeldenetzes ein LWL 1 angeschlossen, der in einem optischen Verteiler OV in mehrere LWL 2 aufgeteilt ist. Vom OV können beispielsweise acht LWL 2 weiterführen. Es können aber auch mehr oder weniger als acht LWL 2 sein. In Fig. 1 sind vier weiterführende LWL 2 dargestellt. Der LWL 1 ist in der VST mit einem Leitungsabschluß LT verbunden. Neben anderen Bauteilen ist in dem LT ein elektro/optischer Umsetzer vorhanden. Über die LWL 1 und 2 können Signale beispielsweise mit einer maximalen Übertragungsrate von 34 Mbit/s übertragen werden.

Die LWL 1 und 2 sind von der VST aus bis zu Endverzweigern EVZ geführt. An die EVZ sind die Teilnehmer Tln über elektrische Leitungen 3 angeschlossen. Als elektrische Leitungen 3 sind mindestens Zweidrahtleitungen (Aderpaare) eingesetzt.

Jeder der LWL 2 endet in einem EVZ. Er ist darin an einen zumindest einen elektro/optischen Umsetzer enthaltenden Leitungsabschluß LT angeschlossen. Die EVZ sind als aktive Endverzweiger mit aktiven, elektrisch arbeitenden Komponenten ausgerüstet. Sie weisen jeweils einen Kanalzuordner KE auf, an den eine Anzahl von Tln angeschlossen ist. In Fig. 1 sind für jeden EVZ acht Teilnehmeranschlüsse eingezeichnet. Mit jedem EVZ ist mindestens ein Tln verbunden. Es können auch mehr oder weniger als acht Tln sein. Jeder EVZ ist in räumlicher Nähe mindestens eines Tln angeordnet. Vom EVZ führen die elektrische Leitungen 3 zu den Tln. Sie können wegen der räumlichen Nähe von EVZ und Tln kurz gehalten werden.

Jeder Tln ist - wie bereits erwähnt - mit einem EVZ über mindestens ein elektrisches Aderpaar (Zweidrahtleitung) verbunden. Vorzugsweise werden jeweils zwei Aderpaare eingesetzt. Auf Maßnahmen zur Richtungstrennung, beispielsweise Echokompensation, kann dann verzichtet werden.

Die elektrischen Leitungen 3 enden bei den Tln jeweils in einem Übergabepunkt P, an dem jedem Tln eine digitale Schnittstelle zur Verfügung steht, an der er Geräte bis zu einer maximalen Übertragungsrate von beispielsweise 2,56 Mbit/s anschließen kann. Er benötigt dazu für jedes Gerät einen Adapter, welcher als Service-Unit SU für dieses Gerät bestimmte Schnittstellensignale liefert. Für die Durchschaltung und Zuordnung der jeweils benötigten Übertragungsrate dienen die Kanalzuordner KE der EVZ, die durch entsprechende Signale von der VST aus gesteuert werden.

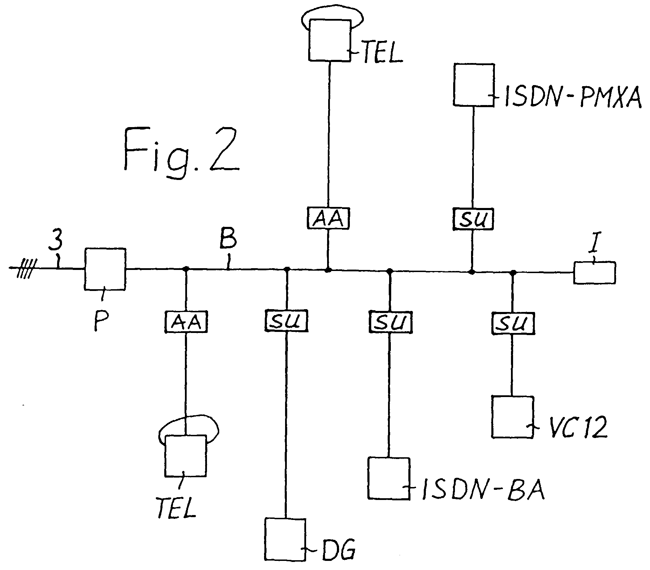

Die Anordnung nach Fig. 1 arbeitet in Verbindung mit Fig. 2 beispielsweise wie folgt:

Vom Übergabepunkt P eines jeden Tln geht beispielsweise eine mit ihrer Impedanz I abgeschlossene Busleitung B aus, an die Geräte angeschlossen werden können, welche ein Tln betreiben will. Das sind beispielsweise Telefon-Hauptanschlüsse TEL, Datengeräte DG, ISDN-Basisanschluß ISDN-BA, ISDN-Primärmultiplexanschluß ISDN-PMXA und auch Anschlüsse für VC12, so wie es in Fig. 2 angedeutet ist. Die zum Betrieb dieser Geräte benötigten Übertagungsraten bzw. Kanäle stehen am Übergabepunkt P grundsätzlich zur Verfügung. Sie müssen nur im Bedarfsfall durchgeschaltet werden.

In der überwiegenden Anzahl werden die Tln zunächst nur einen Anschluß für ein analoges TEL haben. Das TEL ist mittels eines analogen Adapters AA über den Übergabepunkt P als digitale Schnittstelle an die VST angeschlossen. Der eine Umsetzung analog/digital durchführende Adapter AA kann auch im Gerät des TEL integriert sein. Für diesen Anschluß reicht i. w. ein Kanal mit einer Übertragungsrate von 64 kbit/s aus. Wenn weitere Geräte angeschlossen werden sollen, müssen weitere Kanäle durchgeschaltet werden.

Diese Durchschaltung wird über die Kanalzuordner KE durchgeführt. Der dafür erforderliche Steuerbefehl wird von der VST übertragen. Ein Tln kann auf diese Weise so viele Dienste mit entsprechenden Geräten in Anspruch nehmen, wie die am Übergabepunkt P abgreifbare Kanalanzahl bzw. Übertragungsrate es zulassen.

Um das im Bedarfsfall erreichen zu können, braucht der Tln lediglich bei einer dafür vorgesehenen Stelle des Netzbetreibers einen für das jeweilige Gerät geeigneten Adapter mit der spezifischen SU zu erwerben und in seinen Räumen an die Busleitung B anzuschließen. Die Durchschaltung des zusätzlichen Kanals bzw. zusätzlicher Kanäle kann während der Zeit erledigt werden, die der Tln bzw. eine entsprechende Person benötigt, um nach dem Erwerb des Adapters zu seinen Räumlichkeiten zu gelangen.

Die Übertragung digitaler nachrichtentechnischer Signale mit einer Anordnung nach Fig. 1 geschieht beispielsweise wie folgt:

Über die LWL 1 und 2 werden die digitalen Signale bis zu den EVZ übertragen. In den LT der VST und der EVZ werden Laserdioden als Sender und Empfangsdioden verwendet. Für die LWL 1 und 2 werden Monomodefasern eingesetzt. Es ist damit insgesamt sichergestellt, daß die Signale zwischen VST und EVZ mit der vorgegebenen Übertragungsrate von beispielsweise 34 Mbit/s störungsfrei übertragen werden können. Das gilt nicht nur für die bisher im Anschlußleitungsnetz üblichen Entfernungen. Es sind vielmehr ohne den Einsatz von zusätzlichen bzw. speziellen optischen Verstärkern größere Entfernungen zwischen VST und EVZ überbrückbar. Die Anzahl der VST eines Netzes kann daher vermindert werden.

Die Tln sind über die elektrischen Leitungen 3 mit den EVZ bzw. deren KE verbunden. Da die EVZ jeweils in räumlicher Nähe mindestens eines Tln installiert sind, ist sichergestellt, daß die elektrischen Leitungen 3 so kurz sind, daß die digitalen Signale mit der gewünschten maximalen Übertragungsrate von etwa 2,56 Mbit/s störungsfrei zwischen EVZ und Übergabepunkt P übertragen werden können.

In bevorzugter Ausführungsform werden jedem an einen EVZ angeschlossenen Tln 40 Kanäle zu je 64 kbit/s zur Verfügung gestellt. Das entspricht einer Übertragungsrate von 2,56 Mbit/s, die ein Tln maximal ausnutzen könnte, wenn er eine entsprechende Anzahl der angebotenen Dienste nutzen will. Der Tln muß dann seine Geräte mittels geeigneter Adapter an seinen Übergabepunkt P bzw. an die von demselben ausgehende Busleitung B anschließen.

Die Anordnung gemäß Fig. 1 bietet noch den Vorteil, daß eine Überprüfung der Übertragungswege und der Funktionsfähigkeit aller eingesetzten Bauteile bzw. Komponenten vom EVZ her mit einem entsprechend aufgebauten digitalen Sender möglich ist. Dazu kann für die Schleifenprüfung jeweils in den Übergabepunkten P der Tln eine Verbindung der Übertragungswege durchgeführt werden.

Der Vollständigkeit halber wird darauf hingewiesen, daß die angegebenen Übertagungsraten zwischen der VST und den Tln bzw. zwischen der VST und den EVZ nur eine Größenordnung darstellen. Sie können - je nach Bedarf - auch höher oder niedriger sein. Das gilt grundsätzlich auch für die den Tln insgesamt zuführbare Übertragungsrate.

## Patentansprüche

1. Anordnung zur leitungsgebundenen digitalen Nachrichtenübertragung zwischen einer Vermittlungsstelle (VST) eines Fernmeldenetzes und mit derselben verbundenen Teilnehmern (Tln), bei welcher zur Durchschaltung einer gegebenenfalls zu verändernden Übertragungsrate zwischen der Vermittlungsstelle (VST) und einem betroffenen Teilnehmer (Tln) in die digitalen Übertragungswege Kanalzuordner (KE) eingeschaltet sind, die mittels entsprechender Steuerbefehle von der Vermittlungsstelle (VST) aus steuerbar sind, **dadurch gekennzeichnet,**
- daß der digitale Übertragungsweg für jeden Teilnehmer (Tln) bis zu einem eigenen, für diesen Teilnehmer zugänglichen Übergabepunkt (P) geführt ist,
- daß vom Übergabepunkt (P) jedes Teilnehmers (Tln) eine Busleitung (B) ausgeht, an die unterschiedliche Geräte des Teilnehmers (Tln) unter Zwischenschaltung von Adaptern (AA,SU) parallel zueinander anschließbar sind, welche für das jeweilige Gerät bestimmte Schnittstellensignale liefern,
- daß von jedem Teilnehmer (Tln) unterschiedliche Geräte mit denselben zugeordneter Übertragungsrate bis zur Ausnutzung einer am Übergabepunkt (P) verfügbaren maximalen Übertragungsrate wahlweise und getrennt voneinander anschließbar sind,
- daß in räumlicher Nähe der Teilnehmer (Tln) Endverzweiger (EVZ) in den Übertragungsweg eingeschaltet sind und
- daß die Kanalzuordner (KE) in den Endverzweigern (EVZ) angebracht sind.

2. Anordnung nach Anspruch 1, **dadurch gekennzeichnet,**
- daß zwischen der Vermittlungsstelle (VST) und den Endverzweigern (EVZ) Lichtwellenleiter (LWL) als Übertragungsmedium eingesetzt sind und
- daß die Übergabepunkte (P) der Teilnehmer (Tln) über elektrische Leitungen (3) mit den Endverzweigern (EVZ) verbunden sind.

3. Anordnung nach Anspruch 2, **dadurch gekennzeichnet,** daß die elektrischen Leitungen (3) mindestens als Zweidrahtleitungen ausgeführt sind.
